Europäisches Patentamt

**European Patent Office**

Office européen des brevets

(19)

(11) Publication number: **0 193 327**

**A1**

(12) # EUROPEAN PATENT APPLICATION

(21) Application number: **86301082.3**

(22) Date of filing: **17.02.86**

(51) Int. Cl.⁴: **B 01 D 53/14**
**B 01 D 53/26, C 10 K 1/16**

(30) Priority: **19.02.85 US 703062**

(43) Date of publication of application:
**03.09.86 Bulletin 86/36**

(84) Designated Contracting States:
**GB SE**

(71) Applicant: **THE DOW CHEMICAL COMPANY**
**2030 Dow Center Abbott Road P.O. Box 1967**
**Midland, MI 48640(US)**

(72) Inventor: **Pearce, Roscoe Lamont**
**313 Narcissus**
**Lake Jackson Texas 77566(US)**

(72) Inventor: **Shinn, Rodney Omar**
**621 Browning**
**Angleton Texas 77515(US)**

(72) Inventor: **Wolcott, Richard Alan**
**103 Finch**
**Angleton Texas 77515(US)**

(74) Representative: **Burford, Anthony Frederick et al,**
**W.H. Beck, Greener & Co. 7 Stone Buildings Lincoln's Inn**
**London WC2A 3SZ(GB)**

(54) **Low viscosity gas dehydrating agents and gas sweetening agents.**

(57) Low viscosity compositions of matter useful for the dehydration and/or sweetening of natural and synthetic gases, are disclosed using (1) conventional liquid desiccants and/or sweetening agents such as the glycols and alkanol-amines, or glycerine, mixed with (2) glycol ethers or propylene carbonate in amounts from 0.5 to 25 percent by weight to markedly reduce the viscosity of the agents in an amount greater than that calculable from various engineering equations. In addition, the viscosity of glycerine can be lowered by adding a glycol or glycol and propylene carbonate.

Croydon Printing Company Ltd.

EP 0 193 327 A1

# LOW VISCOSITY GAS DEHYDRATING AGENTS
## AND GAS SWEETENING AGENTS

This invention concerns low viscosity gas dehydrating agents and gas sweetening agents.

The gas conditioning industry has long used the glycols (ethylene, diethylene, triethylene and tetraethylene glycols) to dehydrate both natural and synthetic gases. In addition, some processes use both a high efficiency liquid desiccant and a sweetening agent (acid gas absorbent such as an alkanolamine) to accomplish dehydration and sweetening in a single contactor.

These desiccants and sweetening agents for the most part become viscous liquids at temperatures below about 75°F (24°C). Such increase in viscosity affects both the mass transfer rate of water into the desiccant and/or the transfer rate of the acid gases into the sweetening agents as well as the hydraulics of the gas-liquid contactor. Further, higher viscosities affect the wetting efficiency in packed columns.

A very desirable desiccant, from its theoretical ability to pick up water from gases is glycerine. However, it has a very high viscosity even at 98°F (37°C) and is seldom used.

In the new gas fields in the polar regions and higher latitude oceans the problems of viscosity are increased because while the gas producing formation may be, as it often is in the lower 48 states, at 300 to 400°F (150 to 200 °C), bottom-hole temperature, however by the time the gas reaches the surface and is transported to the treating site, it often is at temperatures in the range of the ambient atmosphere (near or below zero in the northern latitudes, to less than 40°F (4 °C) even in Texas during the winter months). Such temperatures of the gas relative to the absorbent liquid temperature at the absorber inlet, quickly cool the absorbent to near gas temperature, the volume of gas being great as compared to the absorbent volume, cools the absorbent rapidly with little temperature rise in the gas.

Thus, it would be useful to have highly efficient liquid desiccants and sweetening agents which would exhibit viscosities lower than those of the glycols and alkanolamines at low temperatures as well as lower viscosities at the more conventional ambient site temperatures.

In accordance with the present invention it has been found that conventional liquid desiccants, such as, ethylene glycol, diethylene glycol, triethylene glycol, and tetraethylene glycols, acid gas absorbents, such as the alkanolamines, sulfolane, and the less conventional desiccant glycerine, as well as mixtures of these agents, can be made less viscious by adding at least 0.5 to 20 percent by weight of one or a mixture of propylene carbonate and/or a glycol ether, such as dipropylene glycol monomethyl ether having a boiling point above 200°F (90°C), and from 0 to 1 percent by weight water associated therewith. Thus one can add to an alkanolamine or a mixture of the desiccants and/or a mixture of the desiccant and sweetening agent from 0.5 to 25 weight percent of a low temperature viscosity control agent soluble in the desiccant, sweetening agent or mixture thereof which will not precipitate out at low temperatures; that is to reduce the viscosity at about 40°F (4°C) more than 25 percent less than that calcul̃able by combining said desiccant/sweetening agent and said viscosity improver. Further, glycerine's viscosity can be lowered by adding a glycol or a mixture of glycol and propylene carbonate. It was somewhat surprising to find that these particular additives reduced the viscosity to a greater extent than one would normally expect from knowledge of the technology of viscosity improvers.

Thus, one can add propylene carbonate or dipropylene glycol monomethyl ether to a desiccant (triethyleneglycol); a sweetening agent (monoethanolamine); a desiccant-sweetening agent mixture (e.g. a glycol and methyl diethanolamine mixture); glycerine; or, to a 50-50 glycerine-triethylene glycol desiccant mixture.

Specifically, the present invention concerns a low viscosity composition and improved process for gas conditioning.

A composition useful in dehydrating and/or sweetening natural and synthetic gases by contact with a liquid desiccant, liquid sweetening agent or mixture of desiccant and sweetening agent which comprises:

(1) a liquid desiccant and/or sweetening agent selected from the group consisting of ethylene glycol, diethylene glycol, triethylene glycol, tetraethylene glycol, alkanolamines, sulfolane, and glycerine;

(2) a low temperature viscosity improver selected from the group consisting of

(a) a glycol ether having a boiling point above 200°F (90°C)

(b) propylene carbonate

(c) mixtures thereof provided that when glycerine is a component of said desiccant/sweetening agent then a glycol or mixture of a glycol and propylene carbonate is present, and

(d) from 0 to 1% by weight of water.

In a process for dehydrating and/or sweetening wet and/or sour natural or synthetic gases by contacting said gas with a desiccant, sweetening agent or desiccant/ sweetening agent selected from the group consisting of glycols, polyglycols, glycerine, alkanolamines and sulfolane, wherein the agent is regenerated by heating to drive off the absorbed water and/or said sour (acid) gases, the improvement comprises: adding to said agent from 0.5 to 25 percent by weight of a low temperature viscosity improver selected from the group consisting of glycol ethers boiling above about 200°F (90°C), propylene carbonate, mixtures thereof, and for glycerine the added combination of a glycol, propylene carbonate or mixtures thereof, thereby to reduce the viscosity at about 40°F (4°C) more than about 25 percent less than that calculable by combining said desiccant/sweetening agent and said viscosity improver.

These viscosity improver additives are stable at the conventional regeneration temperature (350°-400°F; 175-200°C) employed to strip the desiccant of water preparatory for reuse in the absorber section of a process or to strip the acid gas absorbents of both water and the acid gases preparatory to their recycling to the absorber. Since these latter additives do not affect the water absorbing capacity of the more conventional desiccants, their addition does not materially affect the economics of the processes nor the dehydration ability of the conventional desiccant or acid gas absorbing capability of the sweetening agents.

While other well-known viscosity improvers may be thought useful, unless they have the requisite properties to remain with the desiccant or sweetening agent on regeneration, they would be lost or, if recoverable, require additional equipment. For example, methanol is a well-known hydrate inhibitor and could act as a viscosity improver for the desiccants but its vapor pressure is such that it would have to be recovered and reintroduced after each cycle of the absorbent. Further, the lower glycol ethers are subject to the same criticism.

The lower viscosities attributable to these additives in most instances improve the fluid dynamics of the absorber and regeneration steps thus substantially eliminating any penalty assumed with slightly higher liquid throughputs to maintain gas design capacity for a given absorber or regenerator.

In addition, being able to operate at low gas-liquid contact temperatures, an existing dehydration plant, for example, can operate at increased capacity because the gas volume, a function of temperature and pressure, will be less and thus total throughput can be increased. If low temperatures can be tolerated, new plant designs can be smaller.

It is also possible to obtain drier gas when low temperature operations are employed since the gas at absorber overhead conditions will contain less water due to the vapor liquid equilibrium. Additionally, the lower temperatures dictate that the inlet gas will contain less water needing removal.

In the following examples, the percent are by weight unless otherwise stated. These examples are not intended to limit the scope of the invention.

Example 1

The viscosity at 65°F (18°C) and 98°F (37°C) were measured for a number of mixtures of the four conventional glycol desiccants, glycerine and the alkanolamine sweetening agents. The results are set forth in Table I.

TABLE I

| Components | Viscosity* at 65°F (18°C) | Viscosity* at 98°F (37°C) | % Reduction of Viscosity from Pure Component | |
|---|---|---|---|---|
| | | | 65°F (18°C) | 98°F (37°C |
| 100% TEG | 46.05 | 19.00 | -- | -- |
| 99.5 TEG/.5 PC | 45.54 | 18.75 | 1.1 | 1.3 |
| 98 TEG/2 PC | 41.37 | 18.07 | 10.2 | 4.9 |
| 95 TEG/5 PC | 36.77 | 16.26 | 20.2 | 14.4 |
| 90 TEG/10 PC | 34.76 | 14.2 | 24.5 | 25.3 |
| 80 TEG/20 PC | 25.14 | 10.8 | 45.4 | 43.1 |
| | | | | |
| 99.5 TEG/.5 DPM | 46.5 | 18.5 | -1.0 | 2.6 |
| 98 TEG/2 DPM | -- | 17.9 | -- | 5.8 |
| 95 TEG/5 DPM | -- | 17.2 | -- | 9.5 |
| 90 TEG/10 DPM | 38.95 | 15.6 | 16.0 | 17.9 |
| 80 TEG/20 DPM | 31.89 | 13.1 | 30.7 | 31.0 |
| | | | | |
| 100 DEG | 35.05 | -- | -- | -- |
| 80 DEG/20 PC | 19.78 | -- | 43.6 | -- |
| 80 DEG/20 DPM | 27.17 | -- | 22.5 | -- |
| | | | | |
| 100 EG | 20.52 | -- | -- | -- |
| 80 EG/20 PC | 14.06 | -- | 31.5 | -- |
| 80 EG/20 DPM | 20.08 | -- | 2.1 | -- |
| | | | | |
| 100 TETRA | 59.1 | 22.3 | -- | -- |
| 98 TETRA/2 PC | 55.0 | 21.1 | 6.9 | 5.4 |
| 95 TETRA/5 PC | 49.8 | 20.1 | 15.7 | 9.9 |
| 90 TETRA/10 PC | 42.23 | 16.8 | 28.5 | 24.7 |
| 80 TETRA/20 PC | 29.7 | 12.3 | 49.7 | 44.8 |

EG   Ethylene glycol          TEG   Triethylene glycol
DEG  Diethylene glycol        TETRA  Tetraethylene glycol
PC   Propylene Carbonate
DPM  Dipropylene glycol monomethyl ether
*Viscosity in centistokes


In another series of tests TEG was mixed with various acid gas sweetening agents ("MDEA"-methyldiethanolamine or "DEA" diethanolamine) and propylene carbonate (PC). The viscosities are reported in Table II.

### TABLE II

| Component | Viscosity at 65°F (18°C) | % Reduction |
|---|---|---|
| 95% TEG/5% MDEA | 50.56 cstokes | -- |
| 85 TEG/5 MDEA/10 PC | 34.9 | 31% |
| 80 TEG/5 MDEA/15 PC | 31.03 | 39% |
| 95 TEG/5 DEA | 55.44 | -- |
| 85 TEG/5 DEA/10 PC | 41.66 | 25% |
| 80 TEG/5 DEA/15 PC | 33.13 | 41% |

Likewise glycerine was mixed with triethylene glycol (TEG) or PC and also a mixture of TEG and PC. The viscosities of such mixtures is shown in Table III.

### TABLE III

| Component | Viscosity at 98°F (37°C) | % Reduction |
|---|---|---|
| 100% Glycerine | 271.9 cstokes | -- |
| 50% Glycerine/50% TEG | 71.3 | 73.8 |
| 90% Glycerine/10% PC | 221.5 | 18.5 |
| 45% Glycerine/45% TEG/10% PC | 46.11 | 83.0 |

Note that TEG is a suitable viscosity improver but not as effective as the TEG/PC mixture.

## CLAIMS

1.    A composition, for dehydrating and/or sweetening natural and synthetic gases, comprising a liquid desiccant and/or sweetening agent selected from ethylene glycol, diethylene glycol, triethylene glycol, tetraethylene glycol, alkanolamines, sulfolane, and glycerine; characterised in that said composition contains a low temperature viscosity improver selected from

(a)   a glycol ether having a boiling point above 200°F (90°C),

(b)   propylene carbonate,

(c)   mixtures thereof and

(d)   when glycerine is a component of said desiccant/sweetening agent, a glycol or mixture of a glycol and propylene carbonate.

2.    A composition as claimed in Claim 1, wherein the viscosity improver contains up to 1% water.

3.    A composition as claimed in Claim 1 or Claim 2, wherein the viscosity improver is present in an amount of 0.5 to 25 weight percent.

4.    A composition as claimed in any one of the preceding claims, wherein the viscosity improver is dipropylene glycol monomethyl ether or a mixture thereof with propylene carbonate.

5.    A composition as claimed in Claim 1, wherein said liquid desiccant and/or sweetening agent is triethylene glycol, tetraethylene glycol, an alkanolamine or sulfolane and said viscosity improver is propylene carbonate.

6. A composition as claimed in Claim 1, wherein said desiccant is glycerine and said viscosity improver is propylene carbonate.

7. A composition as claimed in Claim 1, wherein said desiccant is glycerine and said viscosity improver is triethylene glycol.

8. A composition as claimed in Claim 1, wherein said desiccant is glycerine and said viscosity improver is a mixture of propylene carbonate and triethylene glycol.

9. A process for dehydrating and/or sweetening wet and/or sour natural or synthetic gases by contacting said gas with a desiccant and/or sweetening selected from glycols, polyglycols, glycerine, alkanolamines and sulfolane, characterised in that there is added to said agent from 0.5 to 25 percent by weight of a low temperature viscosity improver selected from

(a) glycol ethers boiling above about 200°F (90°C)

(b) propylene carbonate,

(c) mixtures thereof and

(d) when glycerine is a component of said desiccant/ sweetening agent, a glycol, propylene carbonate or mixtures thereof.

0193327

European Patent
Office

EUROPEAN SEARCH REPORT

Application number

EP 86 30 1082

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A- 670 700 (S.G. DEHN) * Page 2, line 2 - page 3, line 41 * | 1 | B 01 D 53/14 B 01 D 53/26 C 10 K 1/16 |
| A | | 9 | |
| X | GB-A-1 156 925 (INSTITUT FRANCAIS DU PETROLE DES CARBURANTS ET LUBRIFIANTS) * Page 1, line 1 - page 2, line 13 * | 1,9 | |
| A | US-A-4 478 612 (Z. DIAZ) * Column 6, lines 4-28 * | 1,9 | |
| X | GB-A-1 102 943 (ALLIED CHEMICAL CORP.) * Page 2, lines 42-108 * | 1 | TECHNICAL FIELDS SEARCHED (Int. Cl.4) |
| A | | 9 | B 01 D C 10 K |
| X | FR-A-2 022 039 (THE LUMMUS CO.) * Page 3, line 23 - page 5, line 15 * | 1 | |
| A | | 9 | |
| A | FR-A-1 244 414 (THE FLUOR CORP.) | | |

--- -/-

The present search report has been drawn up for all claims

| Place of search | Date of completion of the search | Examiner |
|---|---|---|
| THE HAGUE | 28-05-1986 | PYFFEROEN K. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503 03 82

| Category | Citation of document with indication, where appropriate, of relevant passages | Relevant to claim | CLASSIFICATION OF THE APPLICATION (Int. Cl.4) |
|---|---|---|---|
| A | FR-A- 487 031 (W.O. FELT) | | |
| A | DE-C- 642 505 (RUHRCHEMIE AG) | | |

## DOCUMENTS CONSIDERED TO BE RELEVANT        Page 2

--- 

-----

TECHNICAL FIELDS SEARCHED (Int. Cl.4)

The present search report has been drawn up for all claims

| Place of search | Date of completion of the search | Examiner |
|---|---|---|
| THE HAGUE | 28-05-1986 | PYFFEROEN K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82